**Europäisches Patentamt**

**(19) European Patent Office**

**Office européen des brevets**

(11) Publication number : **0 375 396 B1**

(12) **EUROPEAN PATENT SPECIFICATION**

(45) Date of publication of patent specification : 15.04.92 Bulletin 92/16

(51) Int. Cl.⁵ : **F02N 15/04, F16H 1/28**

(21) Application number : **89313353.8**

(22) Date of filing : **20.12.89**

(54) **Starter motors.**

(30) Priority : **23.12.88 GB 8830191**

(43) Date of publication of application : **27.06.90 Bulletin 90/26**

(45) Publication of the grant of the patent : **15.04.92 Bulletin 92/16**

(84) Designated Contracting States : **DE ES FR GB IT**

(56) References cited :
**EP-A- 180 018**
**DE-U- 8 426 089**
**FR-A- 2 521 641**

(73) Proprietor : **MAGNETI MARELLI ELECTRICAL LIMITED**
**Shaftmoor Lane**
**Acocks Green Birmingham B28 8SN (GB)**

(72) Inventor : **Squires, Christopher Peter**
**89 Wilderness Lane**
**Great Barr Birmingham B34 7TA (GB)**

(74) Representative : **Carpenter, David et al**
**MARKS & CLERK Alpha Tower Suffolk Street Queensway**
**Birmingham B1 1TT (GB)**

EP 0 375 396 B1

## Description

This invention relates to starter motors, particularly for internal combustion engines, of the kind wherein the rotor of the electric motor of the starter motor drives the pinion gear wheel of the starter motor through the intermediary of an epicyclic reduction gear mechanism.

It is known that during operation of a starter motor to crank an internal combustion engine, particularly a diesel engine, the torque loading imposed upon the drive train of the starter motor fluctuates widely. In certain circumstances very severe shock loadings can be applied to the drive train and it has previously been proposed to incorporate some form of shock absorption in order to minimise impact noise generation and the risk of severe torque loading fluctuations damaging the drive train. It is, for example, known to provide the annular gear with external projections in the form of paddles which abut springs or resilient blocks. However, because of limitations in the space available the projections and resilient blocks or springs must be small and thus have insufficient capacity to absorb high torque loadings, with the result that there is insufficient protection against damage arising from shock loadings. To minimise the risk of damage it is usual to form the annular from a suitably strong material for example sintered metal and thus the cost and complexity are increased. It is an object of the present invention to provide such shock absorbing in a simple, convenient, and effective manner. It is also known from EP-A-180016 to incorporate a torque limiting slipping clutch into the epicyclic reduction gear mechanism to allow the drive to slip in the event of an excessive torque loading.

In accordance with the present invention there is provided a starter motor comprising a fixed frame, an electric motor carried by the frame, an output shaft journaled for rotation and carrying an output pinion gear wheel assembly for engagement, in use, with a ring gear of an internal combustion engine to be started, and, an epicyclic reduction gear mechanism the sun gear of which is diiven by said electric motor, and the planetary gear carrier of which drives said output shaft, the annular gear of said epicyclic reduction gear mechanism being fixed to a first component having therein a recess generally centred on the axis of the annular gear, there being provided a second component fixed to said frame, said second component having an annular projection received within said recess of said first component, the transverse dimensions of the projection of the second component being less than those of the recess of the first component by an amount such that relative angular movement of the first and second components can occur, the cross-sectional shape of said recess and/or said projection is polygonal such that resilient material contained in some or all of the circumferentially extending void or voids defined between the wall of the recess and the wall of the projection is deformed circumferentially by relative angular movement of the walls of said recess and said projection and such relative angular movement is thereby resisted.

Preferably said recess and said projection are both of regular polygonal shape in transverse cross-section.

Preferably said cross-sectional shapes of said recess and said projection are the same.

Alternatively said regular polygonal shape of one of said projection and said recess has n sides and said regular polygonal shape of the other said recess and said projection has 2n sides.

Preferably in a rest condition of said first and second components sides of said projection are presented to corners of said recess.

Conveniently the recess and said projection are generally square in transverse cross-section, and the diagonal dimension of the projection is equal to, or slightly less than the side dimension of the recess, the projection being received within the recess such that the sides of the projection lie at 45° to the sides of the recess and the four generally triangular spaces defined between the sides of the projection and the apices of the recess receiving correspondingly shaped elements of resilient material.

It will be recognised that the resilient material occupying spaces between the periphery of the projection and the wall of the recess provides a shock absorbing means whereby the annular gear can move angularly, about its axis, relative to the frame as permitted by distortion of the resilient material, the annulus subsequently being restored to a rest position by the resilient material.

One example of the invention is illustrated in the accompanying drawings wherein:-

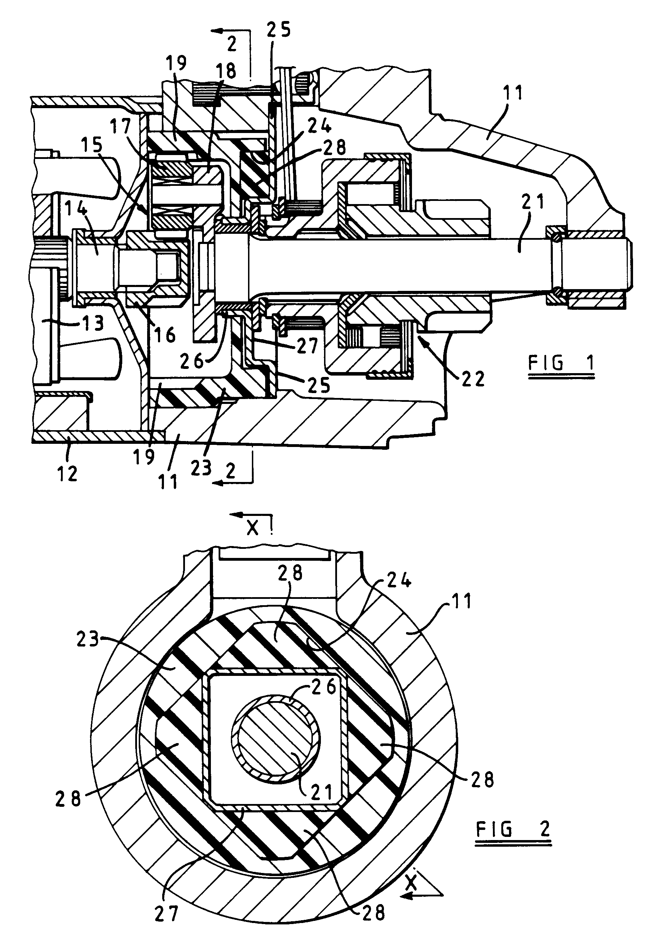

Figure 1 is a composite, longitudinal sectional view of the drive end of a starter motor, and

Figure 2 is a sectional view on the line 2-2 in Figure 1, Figure 2 illustrating, by means of the line x-x the nature of the composite section forming Figure 1.

Referring to the drawings, the starter motor includes a fixed frame 11 whereby the starter motor is secured to an internal combustion engine in use. The fixed frame 11 supports a housing 12 within which is mounted an electric motor 13. The rotor shaft 14 of the electric motor is journaled for rotation in the housing 12 and at one end carries a gear wheel 16 constituting the sun gear of an epicyclic reduction gear mechanism 15. Disposed around, and in meshing engagement with, the sun gear 16 are a plurality of planetary gears 17, the planetary gears 17 being rotatable about axes parallel to the axis of the shaft 14 and being supported by a planetary gear carrier 18. An annular gear 19 encircles the planetary gears 17, the planetary gears 17 meshing with the annular gear 19.

The planetary gear carrier 18 is rigidly connected to an output shaft 21 which is journaled for rotation in the frame 11 with its axis co-extension with the axis of the shaft 14. Mounted for limited axial and angular movement on the shaft 21 is an output pinion gear wheel assembly 22 of conventional form. The assembly 22 includes a pinion gear wheel 23 which can be moved, by movement of the assembly 22 axially on the shaft 21, into meshing engagement with a ring gear of the internal combustion engine to the started. Rotation of the shaft 21 is accompanied by rotation of the pinion gear of the assembly 22 in known manner. Desirably the assembly 22 will include a roller clutch whereby the pinion gear wheel can overrun the shaft 21 when the engine which is being cranked fires.

The annular gear 19 of the epicyclic reduction gear mechanism 15 is an integral part of a cylindrical component 23. The annular gear 19 is defined at one end of the component 23 and at its opposite end the component 23 is formed with a recess 24 which is generally square in transverse cross-section. The recess 24 is centred on the axis of the annular gear 19 which axis is in turn coincident with the axes of the shafts 14 and 21. The recess 24 is not truly square in transverse cross-section since its apices have been rounded. The component 23 is conveniently moulded in a filled synthetic resin material, for example a glass reinforced nylon 66. However, the component 23 could be cast metal, or could be a forging, or could be machined from solid metal stock, or could be formed from sintered metal powder.

An annular pressed steel backing plate 25 is anchored at its outer periphery to the frame 11, and defines an integral cylindrical collar 26 at its inner periphery. The collar 26 supports a bearing sleeve in turn supporting one end of the shaft 21. Intermediate its inner and outer peripheries the plate 25 is shaped to define a projection 27 which is substantially square in transverse cross section and which lies within the recess 24, centred on the axis of the annular gear 19. The transverse cross-sectional shape of the projection 27 is not truly square since its apical edges have been rounded.

The diagonal dimension of the projection 27 is fractionally smaller than the side to side dimension of the recess 24 and the angular orientation of the projection 27 within the recess 24 is such that the sides of the projection lie at 45° to the sides of the recess. (If the angle subtended at the centre of the regular polygonal shape by lines passing through adjacent corners of the shape is defined as the included angle of the regular polygonal shape then the orientation of the projection within the recess is such that the two regular polygonal shapes are displaced from one another by half the included angle).

It will be recognised therefore that ignoring the rounding of the corners of the projection and the recess then four triangular voids are defined between the outer periphery of the projection 27 and the inner wall of the recess 24. Four preformed natural or synthetic rubber inserts 28 are provided, each insert 28 being received within a respective triangular void between the projection and the wall of the recess. The inserts 28 are, in the assembled arrangement, trapped not only between the wall of the recess and the outer periphery of the projection, but also between the base of the recess 24 and the surface of the plate 25. Moreover, desirably the rubber inserts are bonded to the outer surface of the projection 27 and the wall of the recess 24 so that the component 23 and therefore the annulus 19 are supported by the plate 25. Additionally, the outer surface of the annular gear 19 is supported by a cylindrical surface of the frame 11. The inserts 28 resist rotation of the component 23 and therefore the annular gear 19 equally in either direction relative to the backing plate 25 and therefore the frame 11. Thus the annular gear is supported against rotation, but in the event of sudden torque loadings on the drive train between the shaft 14 and the pinion assembly 22 then the component 23 can move angularly about the axis of the shafts 14, 21, the shock loadings being absorbed by the resilient inserts 28. Upon removal of the torque loading the component 23 is restored to its original position relative to the frame 11 by the restoring action of the inserts 28.

It is to be understood that the recess 24 and projection 27 need not be square, and other regular polygonal shapes, for example triangular, or pentagonal, would be suitable. Moreover it is not essential that the recess and projection shapes are the same. For example one could be a regular triangle while the other is a regular hexagon. Where the shapes are not the same it is preferable that if one shape has n sides then the other has 2n sides and it is preferred that the recess has the larger number of sides. It is possible that shapes other than regular polygons could be utilized but this may prove inconvenient during manufacture.

A suitable material for the inserts 28 is a natural rubber having a shore rating around 90.

The use of a synthetic resin material for the component 23 including the annular gear 19 is facilitated by the efficiency of the shock absorbing system. While metal could be used synthetic resin has an attendant advantage of noise reduction within the epicyclic gear mechanism and thus coupled with the reduction of impact noise at the pinion and ring gear teeth, arising from the effect of the shock absorbtion, leads to a quieter starter motor than is achieved in the prior art.

In some applications the electric motor may drive the sun gear of the epicyclic through a gear mechanism and similarly the planetary gear carrier may drive the output shaft through a gear mechanism. Usually the rotational axis will be parallel but if desired bevel gears or the like could be utilised to effect a 90° drive transmission. Thus for example the shaft 21 need not be carried directly by the frame 11 and instead could be carried by a part to which the frame 11 is fixed in use.

## Claims

1. A starter motor comprising a fixed frame (11), an electric motor (13) carried by the frame (11), an output shaft (21) journaled for rotation and carrying an output pinion gear wheel assembly (22) for engagement, in use, with a ring gear of an internal combustion engine to be started, and, an epicyclic reduction gear mechanism (15) the sun gear (16) of which is driven by said electric motor (13), and the planetary gear carrier (18) of which drives said output shaft (21), the annular gear (19) of said epicyclic reduction gear mechanism (15) being fixed to a first component having therein a recess (24) generally centred on the axis of the annular gear (19), and there being provided a second component (25) fixed to said frame, said second component (25) having an annular projection (27) received within said recess (24) of said first component, the transverse dimensions of the projection (27) of the second component being less than those of the recess (24) of the first component by an amount such that relative angular movement of the first and second components can occur, the starter motor being characterized in that the cross-sectional shape of said recess (24) and/or said projection (27) is polygonal such that resilient material (28) contained in some or all of the circumferentially extending void or voids defined between the wall of the recess (24) and the wall of the projection (27) is deformed circumferentially by relative angular movement of the walls of said recess (24) and said projection (27) and such relative angular movement is thereby resisted.

2. A starter motor as claimed in Claim 1 characterized in that said recess (24) and said projection (27) are both of regular polygonal shape in transverse cross-section.

3. A starter motor as claimed in Claim 1 or Claim 2 characterized in that said cross-sectional shapes of said recess (24) and said projection (27) are the same.

4. A starter motor as claimed in Claim 2 characterized in that said regular polygonal shape of one of said projection (27) and said recess (24) has n sides and said regular polygonal shape of the other said recess (24) and said projection (27) has 2n sides.

5. A starter motor as claimed in Claim 3 or Claim 4 characterized in that in a rest condition of said first and second components sides of said projection (27) are presented to corners of said recess (24).

6. A starter motor as claimed in Claim 1 characterized in that the recess (24) and said projection (27) are generally square in transverse cross-section, and the diagonal dimension of the projection is equal to, or slightly less than the side dimension of the recess, the projection being received within the recess such that the sides of the projection lie at 45≈ to the sides of the recess and the four generally triangular spaces defined between the sides of the projection and the apices of the recess receiving correspondingly shaped elements (28) of resilient material.

## Patentansprüche

1. Anlasser mit einem festen Rahmen (11), einem von dem Rahmen (11) getragenen Elektromotor (13), einer für Rotation gelagerte Ausgabewelle (21), die eine Ausgabe-Ritzelzahnradanordnung (22) zum Eingreifen bei der Benutzung in ein Hohlzahnrad eines zu startenden Verbrennungsmotors trägt, und einem Planeten-Untersetzungsgetriebemechanismus (15), dessen Sonnenrad (16) durch den Elektromotor (13) angetrieben wird und dessen Planetenradträger (18) die Ausgabewelle (21) antreibt, wobei das Hohlzahnrad (19) des Planeten-Untersetzungsgetriebemechanismus (15) an einer ersten Komponente mit einer allgemein auf der Achse des Hohlzahnrades (19) zentrierten Ausnehmung (24) befestigt ist, und eine an dem Rahmen befestigte zweite Komponente (25) vorgesehen ist, die einen innerhalb der Ausnehmung (24) der ersten Komponente aufgenommenen ringförmigen Vorsprung (27) aufweist, wobei die Querabmessung des Vorsprunges (24) der zweiten Komponente um einen derartigen Betrag geringer als die der Ausnehmung (24) der ersten Komponente ist, daß ein relative Winkelbewegung der ersten und zweiten Komponente auftreten kann, wobei der Starter dadurch gekennzeichnet ist, daß die Querschnittsform der Ausnehmung und/oder des Vorsprunges (27) so polygonal ist, daß in einigen oder allen des/der zwischen der Wand der Ausnehmung (24) und der Wand des Vorsprunges (27) definierten sich umfangsmäßig erstreckenden Hohlraumes oder Hohlräume enthaltenes elastisches Material (28) umfangsmäßig deformiert wird durch die relative Winkelbewegung der Wand der Ausnehmung (24) und der Wand des Vorsprunges (27) und solcher relativen Winkelbewegung dadurch widerstanden wird.

2. Starter nach Anspruch 1, dadurch gekennzeichnet, daß die Ausnehmung (24) und der Vorsprung (27) beide von regelmäßiger polygonaler Form in querverlaufenden Querschnitten sind.

3. Starter nach Anspruch 1 oder 2, dadurch gekennzeichnet, daß die Querschittsformen der Ausnehmung (24) und des Vorsprunges (27) die gleichen sind.

4. Starter nach Anspruch 2, dadurch gekennzeichnet, daß die regelmäßige polygonale Form von einem des Vorsprunges (27) und der Ausnehmung (24) n Seiten aufweist und daß die regelmäßige polygonale Form des anderen der Ausnehmung (24) und des Vorsprunges (27) 2n Seiten aufweist.

5. Startermotor nach Anspruch 3 oder 4, dadurch gekennzeichnet, daß in einer Ruhebedingung der ersten und zweiten Komponente Seiten des Vorsprunges (27) auf Ecken der Ausnehmung (24) weisen.

6. Starter nach Anspruch 1, dadurch gekennzeichnet, daß die Ausnehmung (24) und der Vorsprung (27) allgemein quadratisch in dem querverlaufenden Querschnitt sind und die Diagonalabmessung des Vorsprunges gleich oder geringfügig geringer als die Seitenabmessung der Ausnehmung ist, wobei der Vorsprung innerhalb der Ausnehmung so aufgenommen wird, daß die Seiten des Vorsprunges um 45° zu den Seiten der Ausnehmung liegen und die vier im allgemeinen dreieckigen zwischen den Seiten des Vorsprunges und den Ecken der Ausnehmung abgegrenzten Räume die entsprechend geformten Elemente (28) des elastischen Materials aufnehmen.

**Revendications**

1. Démarreur comprenant : un cadre fixe (11); un moteur électrique (13) supporté par le cadre (11); un arbre de sortie (21) monté sur palier à des fins de rotation et supportant un assemblage de sortie (22) de roue de transmission à pignon destiné à venir s'engrener, lors de la mise en service, avec une couronne de train planétaire d'un moteur à combustion interne que l'on doit faire démarrer; et un mécanisme de transmission (15) à réduction planétaire, dont la roue solaire (16) est entraînée par ledit moteur électrique (13) et dont le support (18) de l'engrenage planétaire entraîne ledit arbre de sortie (21), la couronne dentée (19) dudit mécanisme de transmission à réduction planétaire (15) étant fixée à un premier composant dans lequel est pratiqué un évidement (24) généralement centré sur l'axe de la couronne dentée (19), un second composant (25) étant fixé audit cadre, ledit second composant (25) comprenant une saillie annulaire (27) logée au sein dudit évidement (24) dudit premier composant, les dimensions transversales de la saillie (27) du second composant étant inférieures à celles de l'évidement (24) du premier composant à raison d'une valeur telle que le mouvement angulaire relatif des premier et second composants peut avoir lieu, le démarreur étant caractérisé en ce que la configuration en section transversale dudit évidement (24) et/ou de ladite saillie (27) est polygonale de telle sorte que la matière résiliente (28) contenue dans certains vides s'étendant circonférentiellement ou dans l'ensemble de ces derniers définis entre la paroi de l'évidement (24) et la paroi de la saillie (27), se déforme circonférentiellement à l'intervention du mouvement angulaire relatif des parois dudit évidement (24) et de ladite saillie (27), un tel mouvement angulaire relatif étant ainsi contré.

2. Démarreur selon la revendication 1, caractérisé en ce que ledit évidement (24) et ladite saillie (27) ont une configuration en polygone régulier en section transversale.

3. Démarreur selon la revendication 1 ou 2, caractérisé en ce que lesdites configurations en section transversale dudit évidement (24) et de ladite saillie (27) sont les mêmes.

4. Démarreur selon la revendication 2, caractérisé en ce que, quant à ladite saillie (27) et audit évidement (24), la configuration en polygone régulier de l'un possède n côtés et celle de l'autre possède 2n côtés.

5. Démarreur selon la revendication 4, caractérisé en ce que, à l'état de repos desdits premier et second composants, les côtés de ladite saillie (27) font face aux coins dudit évidement (24).

6. Démarreur selon la revendication 1, caractérisé en ce que l'évidement (24) et ladite saillie (27) ont une configuration généralement carrée en section transversale, la dimension diagonale de la saillie étant égale à la dimension latérale de l'évidement ou légèrement inférieure à cette dernière, la saillie venant se loger au sein de l'évidement de telle sorte que les côtés de la saillie forment un angle de 45° par rapport aux côtés de l'évidement et, dans les quatre espaces généralement triangulaires définis entre les côtés de la saillie et les sommets de l'évidement, viennent se loger des éléments (28) en matière résiliente à configuration correspondante.

FIG 1

FIG 2